# EUROPÄISCHE PATENTSCHRIFT

(11) **EP 1 193 162 B1**
(45) Veröffentlichungstag und Bekanntmachung des Hinweises auf die Patenterteilung: **05.03.2008**
(21) Anmeldenummer: 01122379.9
(22) Anmeldetag: 19.09.2001
(51) Int. Cl.: B62D 25/14

(54) **Querträger**
Cross member
Poutre transversale

(30) Priorität: 20.09.2000 DE 20016291 U
(43) Veröffentlichungstag der Anmeldung: 03.04.2002
(73) Patentinhaber: ADAM OPEL AG, 65423 Rüsselsheim (DE)
(72) Erfinder: Mildner, Udo, Dipl.-Ing. (FH), 65550 Limburg (DE)

(56) Entgegenhaltungen:
- US-A- 5 456 002

## Beschreibung

Die Erfindung bezieht sich auf einen Querträger, der zwischen den A-Säulen eines Kraftfahrzeugs befestigt ist und die Armaturentafel trägt und der die weiteren Merkmale des Oberbegriffs des Anspruchs 1 aufweist.

Derartige Querträger werden gemäß der US 5,456,002 im Kraftfahrzeugbau sehr häufig eingesetzt. In einer Vormontage werden am Querträger die Armaturentafel und die Lenksäule sowie ggf. weitere Bedienelemente befestigt. Diese Einheit wird als Ganzes in die Karosserie eingesetzt und u. a. mit den A-Säulen verbunden.

Dazu besitzt der Querträger an seinen Enden als Schließplatten ausgebildete Befestigungselemente, die mit den A-Säulen verschraubt bzw. verschweißt werden.

Die Erfindung beruht auf der Aufgabe, die Vorteile dieses Systems weiter auszubauen, so dass die Fahrzeugmontage weiter vereinfacht wird.

Dazu schlägt die Erfindung vor, dass zumindest eine der Schließplatten den Hebelmechanismus zum Betätigen des Motorhaubenverriegelung trägt. Eine weitere Ausgestaltung sieht vor, in den Schließplatten Öffnungen vorzusehen, in denen der Türkabelsatz in einer Tülle gehalten wird.

Des Weiteren wird vorgeschlagen, dass in einem Teilbereich des Schließbleches, das sich quer zur Fahrzeuglängsachse erstreckt, eine Öffnung vorhanden ist, in die ein an der Karosserie befestigter Zentrierbolzen einführbar ist. Auf diese Weise kann die vormontierte Einheit exakt in der Karosserie ausgerichtet werden.

Zur Erläuterung des Erfindungsgedankens wird eine Ausführung der Erfindung anhand von zwei Figuren näher erläutert. Dazu zeigen:
- Fig. 1: eine perspektivische Darstellung eines Querträgers mit zwei Schließplatten und
- Fig. 2: eine seitliche Draufsicht auf eine solche Schließplatte.

Bei dem Querträger 1 handelt es sich um ein rohrförmiges Gebilde, das z. B. im Hydroformingverfahren hergestellt ist. An beiden Enden des Querträgers befindet sich je eine Schließplatte 2, 3.

Außerdem befindet sich am Querträger eine Aufnahme 4 für die Lenksäule des Fahrzeugs.

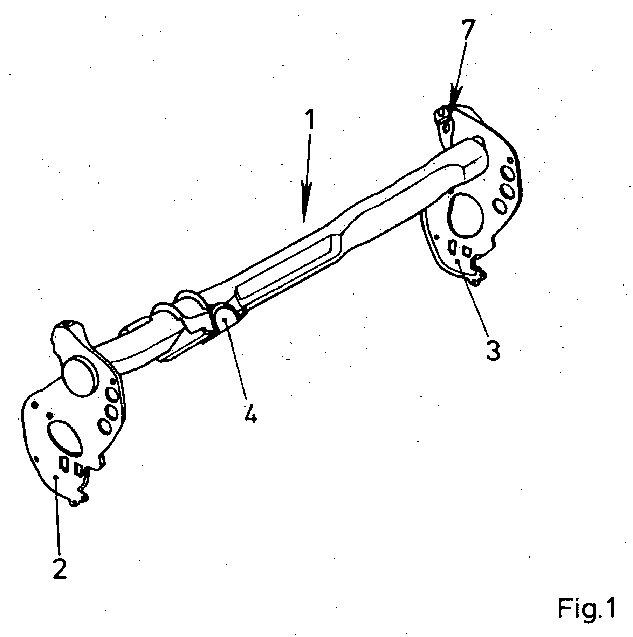

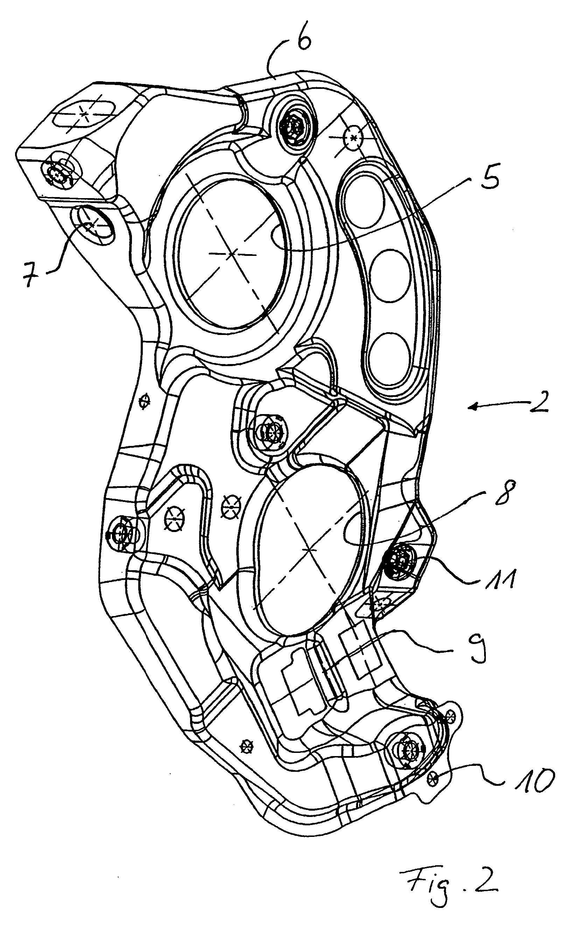

Fig. 2 zeigt die Draufsicht auf eine Schließplatte. Die Schließplatten 2, 3 sind spiegelsymmetrisch zueinander aufgebaut. Im Folgenden wird der Aufbau anhand der linken Schließplatte 2 erläutert. Im oberen Teil der Schließplatte befindet sich eine Einsatzöffnung 5, in die das Ende des Querträgers 1 eingesteckt und verschweißt ist. Zur Versteifung der Schließplatte weist diese eine umlaufende Abkantung 6 auf. Oberhalb des Querträgers ist die Abkantung 6 in der Fläche verbreitet, so dass hier ein Zentrierloch 7 aufgenommen werden kann, was insbesondere in der Fig. 1 bei der rechten Schließplatte 3 gut zu erkennen ist. Diese beiden Zentrierlöcher 7 korrespondieren mit entsprechenden hier nicht dargestellten Zentrierstiften an der Karosserie, so dass die vormontierte Einheit aus Querträger, Schließplatten und Armaturentafel lagegenau in die Karosserie eingebaut werden kann.

Unterhalb der Einsatzöffnung 5 befindet sich in der Schließplatte 2 eine weitere Montageöffnung 8, durch die der Türkabelsatz mittels einer Tülle hindurchgeführt ist.

Da die Schließplatten 2, 3 flächig an die jeweiligen A-Säulen anschließen, kann dort auf eine entsprechende Abdichtung für die Durchführung des Türkabelsatzes verzichtet werden.

Unterhalb der Montageöffnung 8 befinden sich Befestigungslöcher 9 für den Hebel der Haubenentriegelung. Dieser kann schon in der Vormontage dort eingesetzt werden, so dass bei der Montage der Karosserie ein entsprechender Arbeitsschritt eingespart wird.

In die so vorbereitete Haubenentriegelung muss lediglich der Bowdenzug zum Haubenschloss eingehakt werden. An den Schließplatten 2, 3 können des Weiteren Verkleidungen und weitere Verstärkungsstreben für die Armaturentafel befestigt werden. Dazu sind in der Schließplatte bzw. in der Abkantung 6 entsprechende Befestigungs- bzw. Schraublöcher 10, 11 vorgesehen.

## Patentansprüche

1. Querträger in einer Kraftfahrzeugkarosserie, der zwischen den A-Säulen des Kraftfahrzeugs befestigt ist und die Armaturentafel trägt und an seinen Enden Befestigungselemente aufweist, die mit den A-Säulen verschraubt bzw. verschweißt werden, wobei das Fahrzeug eine verriegelbare Motorhaube besitzt, wobei die Befestigungselemente als Schließplatten (2, 3) ausgebildet sind, **dadurch gekennzeichnet, dass** zumindest eine der Schließplatten (2) den Hebelmechanismus zum Betätigen der Motorhaubenverriegelung trägt.

2. Querträger nach Anspruch 1, **dadurch gekennzeichnet, dass** in den Schließplatten (2, 3) Öffnungen (8) vorgesehen sind, in denen ein Türkabelsatz in einer Tülle gehalten ist.

3. Querträger nach Anspruch 1 oder 2, **dadurch gekennzeichnet, dass** in einem Teilbereich (6) eines jeden Schließbleches (2, 3), das sich quer zur Fahrzeuglängsachse erstreckt, eine Zentrieröffnung (7) vorhanden ist, in die ein an der Karosserie befestigter Zentrierbolzen einführbar ist.

4. Querträger nach Anspruch 1, 2 oder 3, **dadurch gekennzeichnet, dass** an den Schließplatten (2, 3) Verkleidungen und Verstärkungsstreben befestigt sind.

## Claims

1. Crossbeam in a motor vehicle body, which is fastened between the A-pillars of the motor vehicle and supports the instrument panel and at its ends has fastening elements, which are screwed or welded to the A-pillars, wherein the vehicle has a lockable bonnet, wherein the fastening elements are configured as retaining plates (2, 3), **characterised in that** at least one of the retaining plates (2) supports the lever mechanism for operating the bonnet locking arrangement.

2. Crossbeam according to claim 1, **characterised in that** openings (8) are provided in the retaining plates (2, 3), in which a door cable assembly is held in a bushing.

3. Crossbeam according to claim 1 or 2, **characterised in that** a locating opening (7), into which a locating bolt fastened to the body can be inserted, is provided in a part (6) of each retaining plate (2, 3), which extends transversely to the longitudinal axis of the vehicle.

4. Crossbeam according to claim 1, 2 or 3, **characterised in that** linings and reinforcement struts are fastened to the retaining plates (2, 3).

## Revendications

1. Poutre transversale dans une carrosserie de véhicule à moteur, qui est fixée entre les montants A du véhicule à moteur et supporte le pupitre de conduite et présente des éléments de fixation à ses extrémités, lesquels sont vissés ou soudés aux montants A, le véhicule à moteur possédant un capot verrouillable, les éléments de fixation étant formés en tant que plaques (2, 3) de fermeture, **caractérisée en ce qu'**au moins une des plaques (2) de fermeture supporte le mécanisme à levier pour actionner le verrouillage du capot moteur.

2. Poutre transversale selon la revendication 1, **caractérisée en ce que** des ouvertures (8) sont prévues dans les plaques (2, 3) de fermeture, dans lesquelles un ensemble de câbles de porte est maintenu dans une douille passe-câbles.

3. Poutre transversale selon la revendication 1 ou 2, **caractérisée en ce que** dans une région partielle (6) de chaque plaque (2, 3) de fermeture, qui s'étend transversalement par rapport à l'axe longitudinal du véhicule, une ouverture (7) de centrage est présente, dans laquelle une broche de centrage fixée à la carrosserie peut être introduite.

4. Poutre transversale selon la revendication 1, 2 ou 3, **caractérisée en ce que** des revêtements et des entretoises de renforcement sont fixés sur les plaques (2, 3) de fermeture.
